Europäisches Patentamt

European Patent Office

Office européen des brevets

(19)

(11) Veröffentlichungsnummer: **0 086 326**
**A1**

(12) **EUROPÄISCHE PATENTANMELDUNG**

(21) Anmeldenummer: **83100139.1**

(22) Anmeldetag: **10.01.83**

(51) Int. Cl.³: **G 03 B 27/62, G 03 B 27/32**

(30) Priorität: **10.02.82 US 347406**

(43) Veröffentlichungstag der Anmeldung: **24.08.83**
**Patentblatt 83/34**

(84) Benannte Vertragsstaaten: **DE FR GB IT NL**

(71) Anmelder: **AMERICAN HOECHST CORPORATION, Route 202-206 North, Somerville, N.J. 08876 (US)**

(72) Erfinder: **Seeley, Douglas A., 63 Church Street, High Bridge New Jersey 08829 (US)**

(74) Vertreter: **Zounek, Nikolai, Dipi.-Ing. et al, c/o KALLE Niederlassung der Hoechst AG Patentabteilung Postfach 3540, Rheingaustrasse 190 D-6200 Wiesbaden 1 (DE)**

(54) **Vorlagenbühnenhalterung.**

(57) Die Erfindung betrifft eine Vorlagenbühnenhalterung (30) zur Verwendung in einer Reprokamera, bestehend aus einem drehbaren Rahmen (32), an dem zumindest drei Vorlagenbühnen (42, 44, 46) befestigt sind. Die Oberflächen (54, 56, 58) dieser Vorlagenbühnen sind im Abstand voneinander angeordnet und so ausgerichtet, daß, während eine Bühne (44) in einer im wesentlichen senkrechten Stellung (B) belichtet wird, die als nächste zu belichtende Bühne (42) im wesentlichen nach oben gerichtet ist, um eine Vorlage aufzunehmen, und die Oberfläche (58) der Bühne (46), in die danach eine Vorlage eingelegt werden soll, nach unten zeigt.

AMERICAN HOECHST CORPORATION
Somerville, N.J. 08876/USA

82/K076                    - 1 -              04. Januar 1983
                                              WL-DI.Z.-is

Vorlagenbühnenhalterung

Die Erfindung betrifft eine Vorlagenbühnenhalterung
für eine Kamera, die im Abstand von einem Objektiv der
Kamera positioniert ist.

Es hat sich gezeigt, daß bei Verwendung großformatiger, im graphischen Gewerbe eingesetzter Reprokameras,
wie z.B. des Elfasol EA 692-Kamerasystems der KALLE
Niederlassung der Hoechst AG, Wiesbaden, die Vorlagenbühne parallel zum Objektiv der Kamera angeordnet sein
muß, da der Abstand zwischen Vorlage und zu belichtender Platte bzw. zu belichtendem Film zu groß ist, als
daß das Objektiv der Kamera senkrecht zur Vorlagenbühne angeordnet werden könnte. In derartigen Vorrichtungen gemäß dem US-Patent 4,006,984 (deutsches Patent
2 452 979) ist die Vorlagenbühne vertikal ausgerichtet, so daß die bildweise Belichtung des Films durch
das parallel im Abstand angebrachte Objektiv der
Kamera erfolgen kann. Da bei dieser Art von Kamera ein
Großteil der Zeit eines Kopierzyklusses darauf verwendet wird, die Klebeumbrüche auf der Vorlagenbühne zu
wechseln, wäre es von großem Vorteil, wenn eine Vorlagenbühne belichtet werden könnte, während eine andere
schon für die nächste Belichtung vorbereitet wird. Es
sind zwar doppelseitige Vorlagenbühnen bekannt, doch
sind sie alle derart gestaltet, daß die eine Seite zur
Belichtung nach unten gerichtet ist, während die
andere Seite zum Einlegen der Vorlage nach oben zeigt.
Würde eine solche doppelseitige Vorlagenbühne in einem

AMERICAN HOECHST CORPORATION,
Somerville, N.J.08876/USA

- 2 -

Großformatkamerasystem verwendet, bei dem die Vorlagenbühne, wie voranstehend erläutert, vertikal angeordnet ist, müßte auch die Seite der Vorlagenbühne, auf der gerade eine Vorlage eingelegt wird, vertikal stehen. Doch können viele Klebeumbrüche gar nicht in der senkrechten Stellung gehalten werden, da in dieser Lage schlecht geklebte oder gewachste Teile der Vorlage leicht verrutschen oder abfallen.

Aufgabe der Erfindung ist es, die Nachteile bekannter Vorlagenbühnen zu vermeiden. und eine verbesserte mehrseitige Vorlagenbühnenhalterung zur Verwendung in einer Reprokamera zu schaffen, bei der die Oberfläche, die gerade belichtet wird, im wesentlichen senkrecht steht, während die Oberfläche, auf der gerade eine neue Vorlage eingelegt wird, im wesentlichen waagerecht liegt und nach oben zeigt.

Diese Aufgabe wird erfindungsgemäß dadurch gelöst, daß die Vorlagenbühnenhalterung einen drehbaren Rahmen aufweist, der zumindest drei Vorlagenbühnen trägt, die nacheinander vor das Objektiv der Kamera geführt werden, daß jede der Vorlagenbühnen eine nach außen gerichtete Oberfläche zur Aufnahme einer Vorlage aufweist, und daß die drei Oberflächen auf dem Rahmen im Abstand voneinander derart angeordnet sind, daß eine der Oberflächen zur Belichtung eine nahezu vertikale Position (B) einnimmt, eine andere Oberfläche sich in einer im wesentlichen nach oben gerichteten Position (A) zur Aufnahme der Vorlage befindet und eine weitere

AMERICAN HOECHST CORPORATION,
Somerville, N.J.08876/USA

- 3 -

Oberfläche in einer im wesentlichen nach unten weisenden Position (C) ist, in der sie auf das Drehen in die
Position (A) zur Aufnahme der Vorlage wartet.

Die weitere Ausgestaltung der Erfindung ergibt sich
aus den Patentansprüchen 2 bis 9.

Mit der Erfindung werden die Vorteile einer großen
Zeitersparnis und eines sicheren Festhaltens der Vorlagen bzw. Klebeumbrüche ohne Verrutschen in der Belichtungsstellung erzielt.

Unter Bezugnahme auf die beigefügten Zeichnungen wird
die Erfindung im folgenden näher erläutert.

Es zeigen:

Fig. 1    eine schematische Seitenansicht einer Reprokamera mit einer senkrecht ausgerichteten,
          aus dem Stand der Technik bekannten
          Vorlagenbühne;

Fig. 2    eine schematische Seitenansicht einer Reprokamera, in der die erfindungsgemäße dreiseitige Vorlagenbühnenhalterung verwendet wird;

Fig. 3    eine vergrößerte schematische Darstellung der
          erfindungsgemäßen dreiseitigen
          Vorlagenbühnenhalterung; und

AMERICAN HOECHST CORPORATION,
Somerville, N.J.08876/USA

- 4 -

Fig. 4    eine perspektivische Ansicht der drehbar gelagerten Vorlagenbühnenhalterung.

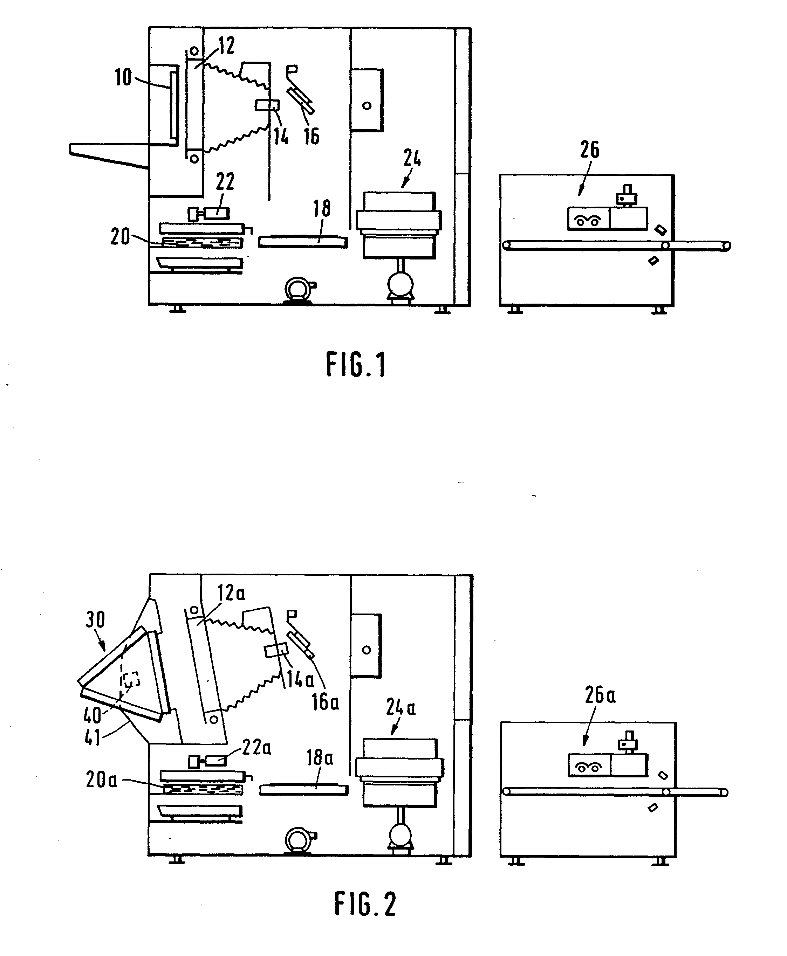

Fig. 1 stellt in verallgemeinerter Form eine Reprokamera dar, die für Lichtdruck, Lithographie oder andere
fotomechanische Reproduktionsverfahren geeignet ist,
bei denen die Erfindung eingesetzt werden kann. In der
US-Patentschrift 4,006,984 (Friese) ist eine Kamera
beschrieben, die etliche der in Fig. 1 dargestellten
Merkmale aufweist. Fig. 1 zeigt eine vertikal angeordnete Vorlagenbühne 10, die gegenüber der Kamera 12 mit
dem Objektiv 14 so positioniert ist, daß das Bild der
Vorlagenbühne genau auf einen planen Spiegel 16 gelenkt wird, der geneigt zur Horizontalen angeordnet
ist und das Bild auf eine Saugunterlage 18 reflektiert, auf der ein zu belichtendes Material festgehalten ist. Wenn das Gerät in Betrieb ist, wird das
unbelichtete Material, z.B. eine Druckplatte, durch
eine pneumatisch betriebene Entnahmevorrichtung 22 von
einem Vorratsmagazin 20 zur Belichtung auf die Saugunterlage 18 transportiert und anschließend in einer
Entwicklungsstation 24 entwickelt. Je nach Art der
verwendeten Platte wird die Platte anschließend in
einer hierfür geeigneten Fixierstation 26 fixiert und
kann danach für Reproduktionszwecke verwendet werden.

In Fig. 2 ist die herkömmliche, vertikal ausgerichtete
Vorlagenbühne 10 durch eine erfindungsgemäße Vorlagenbühnenhalterung 30 ersetzt. Die Kameravorrichtung ist
im übrigen die gleiche wie in Fig. 1 und die einzelnen

0086326

Elemente sind durch die gleichen Positionsnummern gekennzeichnet, die lediglich mit dem Zusatz "a" versehen sind. Die Vorrichtung umfaßt die Kamera 12a, die
Optik 14a, den Spiegel 16a, die Saugunterlage 18a,
das Vorratsmagazin 20a, die Entnahmevorrichtung 22a,
die Entwicklungsstation 24a und die Fixierstation 26a.
Die Ausrichtung der Kamera 12a mit der Optik 14a ist
gegenüber der Ausführungsform nach Fig. 1 geringfügig
verändert, so daß sie mit der Stellung der Vorlagenbühnenhalterung 30 übereinstimmt, d.h. daß die Kamera 12a parallel zu der ihr zugewandten Vorlagenbühne
ausgerichtet ist.

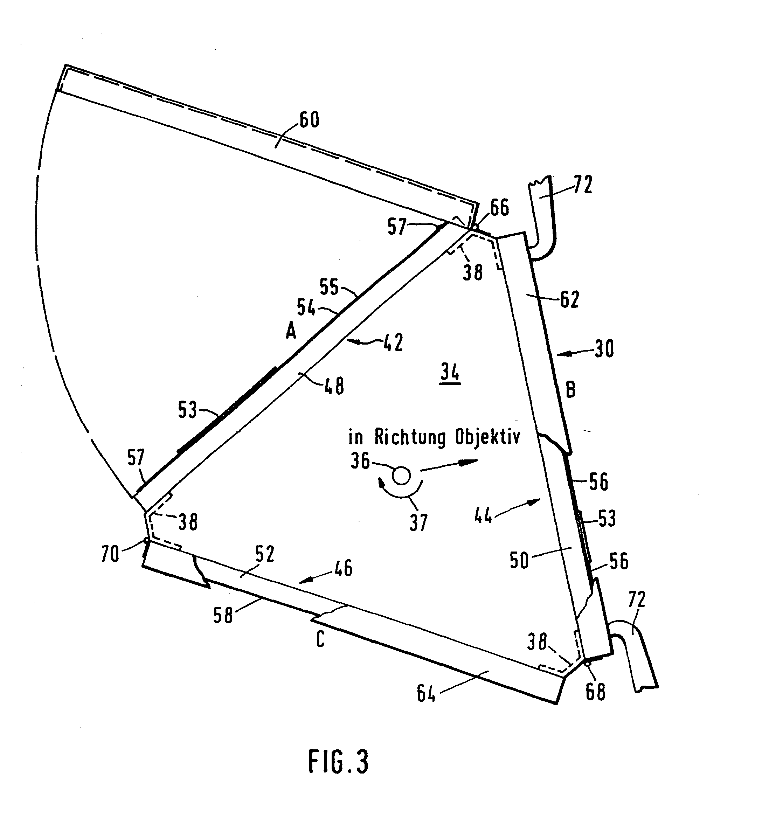

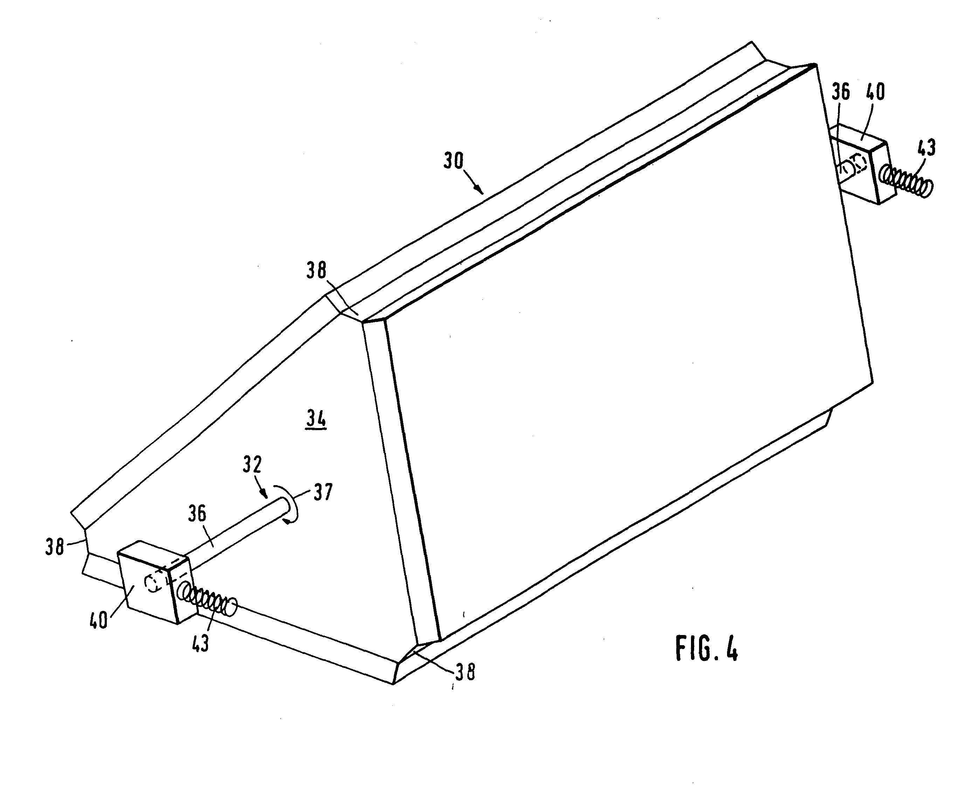

Die Figuren 3 und 4 zeigen jeweils einen vergrößerten
Ausschnitt der Vorlagenbühnenhalterung 30, die im einzelnen aus einem drehbaren Rahmen 32 mit einem Paar
Stirnflächen 34, von denen nur eine sichtbar ist und
die andere, nichtdargestellte, genau gleich ausgebildet ist, und aus einer Drehwelle 36, die axial aus
den Stirnflächen herausragt, besteht. Zwischen den
Stirnflächen 34 erstrecken sich von den Eckkanten aus
in Längsrichtung Stege 38, die den drehbaren Rahmen 32
zu einem einheitlichen Gebilde vereinen. Die Rahmenteile können aus Metall oder sonstigem geeigneten
Material bestehen. Die Welle 36 ist so gelagert, daß
sie z.B. in Lagerböcken 40 drehbar ist, die an den
beiden Seiten des Gehäuses 41 der Reprokamera angebracht sind, die den beiden sich gegenüberliegenden
Enden des Rahmens 32 benachbart sind (vgl. Fig. 2).
Die Welle 36 kann in Richtung des Pfeils 37 gedreht

AMERICAN HOECHST CORPORATION,
Somerville, N.J.08876/USA

- 6 -

werden, was manuell oder mittels eines geeigneten elektrisch angetriebenen Mechanismus erfolgen kann.

Auf dem drehbaren Rahmen 32 sind drei Vorlagebühnen 42,44,46 angebracht, die jeweils einen Saugtisch 48,50,52 aufweisen. Die Saugtische 48,50,52 sind an herkömmliche, nicht dargestellte Saugeinrichtungen angeschlossen. Die nach außen gerichteten Oberflächen 54,56,58 der Vorlagenbühnen, die die Vorlagen aufnehmen, sind etwa im gleichen Abstand von der axialen Drehwelle 36 des Rahmens 32 angebracht. Zur weiteren Bestimmung der räumlichen Abstandsverhältnisse der die Vorlagen aufnehmenden Oberflächen 54,56,58 sind diese Oberflächen in Ebenen angeordnet, deren Schnittlinien ein etwa gleichseitiges Dreieck einschließen, d.h. die Winkel zwischen den Schenkeln betragen jeweils etwa 60°.

Der Betrieb läuft so ab, daß zunächst Klebeumbrüche 53 auf Montageblättern 55 befestigt werden, die dann auf die Oberflächen 54,56 und 58 der Vorlagenbühnen aufgelegt werden. Justierstifte 57 an den Ecken der Oberflächen der Vorlagenbühnen greifen in Öffnungen der Blätter 55 ein, so daß die Blätter 55 genau ausgerichtet auf den Oberflächen der Vorlagenbühnen aufliegen. Damit die Vorlagen nicht verrutschen, sind für die einzelnen Vorlagenbühnen transparente Abdeckungen 60,62 und 64 vorgesehen, die vorzugsweise aus Glas bestehen und an einem Ende der Bühne mittels Drehgelenken 66,68 und 70 befestigt sind, so daß sie zum

AMERICAN HOECHST CORPORATION,
Somerville, N.J.08876/USA

- 7 -

Ausrichten der Vorlage hochgeklappt (vgl. Abdeckung 60 in Fig. 3) und danach wieder zugeklappt werden können, um die Vorlage unverrückbar festzuhalten. Dann wird ein Vakuum erzeugt, wodurch die Vorlage, sobald die einzelne Vorlagenbühne in die Belichtungsposition gedreht wird, von der elastischen Oberfläche der Vorlagenbühne in die Brennpunktebene des Objektivs gegen die Glasabdeckung gepreßt wird. Die Erzeugung des Vakuums erfolgt, nachdem die betreffende Abdeckung zugeklappt worden ist, und das Vakuum muß wieder aufgehoben werden, bevor die Abdeckung hochgeschwenkt wird. Wie aus Fig. 3 ersichtlich ist, wird jede Vorlagenbühne in im wesentlichen nach oben gerichteter Stellung "A" mit einer Vorlage versehen, danach in eine im wesentlichen vertikale Belichtungsposition "B" und schließlich in eine nach unten gerichtete Warteposition "C" gedreht, aus der nach einer bestimmten Wartezeit wieder in die "A"-Stellung gedreht wird, um mit einer Vorlage beschickt zu werden.

Um sicherzustellen, daß alle drei, Vorlagen tragenden Oberflächen 54,56,58 sich in der Belichtungsposition stets in der gleichen Ebene befinden, ist ein Paar ortsfester Rasten 72 am Gehäuse 41 der Reprokamera befestigt. In Fig. 3 ist schematisch dargestellt, wie sich die Rasten 72 vom Gehäuse aus zur Vorlagenbühnenhalterung 30 erstrecken. Alle drei Glasabdeckungen 60,62 und 64 sind gleich dick, und die Außenfläche jeder Abdeckung liegt an den Rasten 72 an. In der Belichtungsposition werden die Abdeckungen 60,62 und

0086326

AMERICAN HOECHST CORPORATION,
Somerville, N.J.08876/USA

- 8 -

64 jeweils durch Federkraft in Richtung des Objektivs und gegen die Rasten 72 gepreßt, wofür eine gebräuchliche Spannvorrichtung verwendet wird, die in Fig. 4 durch Federn 43 angedeutet ist, die gegen die Lagerböcke 40 mit einem Ende anliegen.

Es sind auch bestimmte Fälle denkbar, in denen mehr als drei Vorlagenbühnen vorgesehen werden, so z.B. fünf kleinere Vorlagenbühnen, die auf einem entsprechend konstruierten drehbaren Rahmen befestigt sind, der die Ausübung der Erfindung in der beschriebenen Weise ermöglicht. Daher werden derartige Vorrichtungen von dem Erfindungsgedanken miterfaßt.

Die Erfindung ist anhand der am geeignetsten erscheinenden Ausführungsform beschrieben worden, jedoch sind weitere Ausführungsformen denkbar, die hiervon im Rahmen des Erfindungsgedankens abweichen können, der nicht auf die offenbarten Einzelheiten beschränkt sein soll.

---

AMERICAN HOECHST CORPORATION
Somerville, N.J. 08876/USA

82/K076                    - 9 -              04. Januar 1983
                                              WL-DI.Z.-is

## Patentansprüche

1. Vorlagenbühnenhalterung für eine Kamera, die im Abstand von einem Objektiv der Kamera positioniert ist, dadurch gekennzeichnet, daß die Vorlagenbühnenhalterung (30) einen drehbaren Rahmen (32) aufweist, der zumindest drei Vorlagenbühnen (42,44,46) trägt, die nacheinander vor das Objektiv (14a) der Kamera (12a) geführt werden, daß jede der Vorlagenbühnen (42,44,46) eine nach außen gerichtete Oberfläche (54,56,58) zur Aufnahme einer Vorlage aufweist, und daß die drei Oberflächen (54,56,58) auf dem Rahmen (32) im Abstand voneinander derart angeordnet sind, daß eine der Oberflächen (56) zur Belichtung eine nahezu vertikale Position (B) einnimmt, eine andere Oberfläche (54) sich in einer im wesentlichen nach oben gerichteten Position (A) zur Aufnahme der Vorlage befindet und eine weitere Oberfläche (58) in einer im wesentlichen nach unten weisenden Position (C) ist, in der sie auf das Drehen in die Position (A) zur Aufnahme der Vorlage wartet.

2. Vorlagenbühnenhalterung nach Anspruch 1, dadurch gekennzeichnet, daß jede der Vorlagenbühnen (42,44,46) eine transparente Abdeckung (60,62,64) aufweist, die an einem Ende um ein Drehgelenk (66,68,70) schwenkbar ist, das an der Vorlagenbühne befestigt ist und daß die Abdeckungen (60,62,64) die Oberflächen (54,56,58) mit den darauf befindlichen Vorlagen in ihrer Gesamtheit abdecken und die Vorlagen in ihren Positionen

AMERICAN HOECHST CORPORATION,
Somerville, N.J.08876/USA

- 10 -

während der Drehung der einzelnen Vorlagenbühne in die Belichtungsstellung festhalten.

3. Vorlagenbühnenhalterung nach Anspruch 1, dadurch gekennzeichnet, daß den Rahmen (32) ein Paar von Stirnflächen (34) abschließt, von denen sich eine Welle (36) in Axialrichtung des Rahmens (36) nach außen erstreckt, die in Lagerböcken (40) gelagert ist und daß die Lagerböcke (40) auf dem Gehäuse (41) der Kamera (12a) nahe den sich gegenüberliegenden Stirnflächen des Rahmens (32) befestigt sind.

4. Vorlagenbühnenhalterung nach Anspruch 3, dadurch gekennzeichnet, daß der Abstand der Oberflächen (54,56,58) der Vorlagenbühnen (42,44,46) von der Welle (36) jeweils etwa gleich groß ist.

5. Vorlagenbühnenhalterung nach Anspruch 4, dadurch gekennzeichnet, daß die Oberflächen (54,56,58) der Vorlagenbühnen in Ebenen liegen, deren Schnittlinien ein gleichseitiges Dreieck einschließen.

6. Vorlagenbühnenhalterung nach Anspruch 2, dadurch gekennzeichnet, daß die Oberflächen (54,56,58) der Vorlagenbühnen (42,44,46) als Saugtische (48,50,52) ausgebildet sind, auf denen die Vorlagen mittels Unterdruck für die Belichtung festgehalten werden.

7. Vorlagenbühnenhalterung nach Anspruch 3, dadurch gekennzeichnet, daß eine Spannvorrichtung aus Federn

AMERICAN HOECHST CORPORATION,
Somerville, N.J.08876/USA

- 11 -

(43) jede Vorlagenbühne (42,44,46) in Richtung des Objektivs (14a) drückt, sobald die Vorlagenbühne die Belichtungsstellung einnimmt und daß die Federn (43) mit einem Ende gegen die Lagerböcke (40) anliegen.

8. Vorlagenbühnenhalterung nach den Ansprüchen 2, 3 und 7, dadurch gekennzeichnet, daß am Gehäuse (41) der Kamera (12a) zumindest eine Raste (72) befestigt ist, gegen die die Abdeckung (60,62,64) aufgrund des Federdrucks der Federn (43) anliegt, wenn die Vorlagenbühne (42,44,46) die Belichtungsstellung einnimmt.

9. Vorlagenbühnenhalterung nach Anspruch 8, dadurch gekennzeichnet, daß ein Paar ortsfester Rasten (72) am Gehäuse (41) der Kamera (12a) befestigt ist, daß die Rasten (72) sich vom Gehäuse aus in Richtung der Vorlagenbühnenhalterung (30) erstrecken und daß die Außenfläche jeder Abdeckung (60,62,64) in Nähe ihrer Enden an den Rasten (72) in der Belichtungsstellung anliegt.

---

FIG.1

FIG.2

0086326

FIG.3

0086326

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A- 885 963 (FOTOKOPIST GmbH.) <br> * Seite 1, Zeilen 58-62; Seite 2; Seite 3, Zeilen 1-29; Figuren 1-5 * <br><br> --- | 1-6 | G 03 B 27/62 <br> G 03 B 27/32 |
| X | FR-A-1 147 854 (R.E. CHEROUVRIER) <br> * Seite 3, Spalte 1; Figur 5 * <br><br> --- | 1-4 | |
| A | GB-A-2 054 176 (DAINIPPON SCREEN MFG. CO.) <br> * Seite 4, Zeile 40; Seite 5, Zeilen 1-5; Figuren 1-4 * <br><br> --- | 8,9 | |
| A | US-A-3 765 761 (C.J. LEONHART) <br> * Spalte 3, Zeilen 50-68; Spalte 4, Zeilen 1-42; Figur 4 * <br><br> ----- | 8,9 | **RECHERCHIERTE SACHGEBIETE (Int. Cl. ³)** <br><br> G 03 B 27/62 <br> G 03 B 27/64 <br> G 03 B 27/32 <br> G 03 B 27/46 |

Der vorliegende Recherchenbericht wurde für alle Patentansprüche erstellt.

| Recherchenort <br> DEN HAAG | Abschlußdatum der Recherche <br> 19-05-1983 | Prüfer <br> BOEYKENS J.W. |
|---|---|---|